Europäisches Patentamt

**European Patent Office**

**Office européen des brevets**

(19)

(11) Publication number: **0 032 484**
A1

(12) # EUROPEAN PATENT APPLICATION

(21) Application number: **81830004.8**

(22) Date of filing: **05.01.81**

(51) Int. Cl.³: **B 26 B 13/22**
**H 02 G 1/12**

(30) Priority: **08.01.80 IT 2042480 U**

(43) Date of publication of application:
**22.07.81 Bulletin 81/29**

(84) Designated Contracting States:
**AT BE CH DE FR GB LI NL SE**

(71) Applicant: **RAMUNDI BORINI BREIDENBACH S.p.A.**
**Via Lambro, 37**
**I-22030 - Castelmarte (Como)(IT)**

(72) Inventor: **Ramundi, Michelino**
**Via Castello, 22**
**Canzo (Como)(IT)**

(74) Representative: **Cicogna, Franco**
**Ufficio Internazionale Brevetti Dott.Prof. Franco Cicogna**
**Via Visconti di Modrone, 14 A**
**I-20122 - Milano(IT)**

(54) A multiple-use scissors unit for electricians.

(57) A multiple-use scissors unit, particularly for electricians, is provided comprising first and second blades (2,3,), in cross-wise relationship and pivoted at an intermediate portion thereof, handle ring members (4) being provided at one end of the blades (2,3), while at the free end of at least one blade (2) a flattened lug (6) is formed in the shape of a screw driver end or point.

Croydon Printing Company Ltd.

## BACKGROUND OF THE INVENTION

The present invention relates to a multiple-use scissors unit, particularly for electricians.

As it is known, several types of scissors are presently available comprising a pair of blades, of any suitable snapes, in cross-wise relationsuip one to another and pivoted at an intermediate position tnereof.

More specifically, considering tue electrician scissors, these latter practically differ from the conventional scissors only due to the provision of an electrically insulating layer material, as coated on tne nandle ends.

Furtnermore these scissors may nave opposite seats acting for peeling off the wire sheath.

Wnile these scissors are universally used, tney have been found susceptible to improvements, mainly with respect to their flexibility of operation.

## SUMMARY OF THE INVENTION

Accordingly tne main object of tne present invention is to provide a multiple-use scissors unit wnich, in addition to tne conventional cutting properties, is effective to carry out otner operations of great utility for tne electricians and, obviously, well accepted to other users.

BAD ORIGINAL

Another object of the present invention is to provide a scissors unit which, while affording greatly improved characteristics, is of simple construction like the conventional scissors.

Yet another object of the present invention is to provide a scissors unit which is particularly advantageous from an economic point of view.

The aforesaid and other objects, which will become more apparent hereinafter, are achieved by a multiple-use scissors unit, particularly for electricians, comprising a first and second blades, in cross-wise relationship and pivoted at an intermediate portion thereof, handle ring members being provided at one end of said blades, characterized in that at the free end of at least one said blade a flattened lug is provided in the shape of a screwdriver end or point.

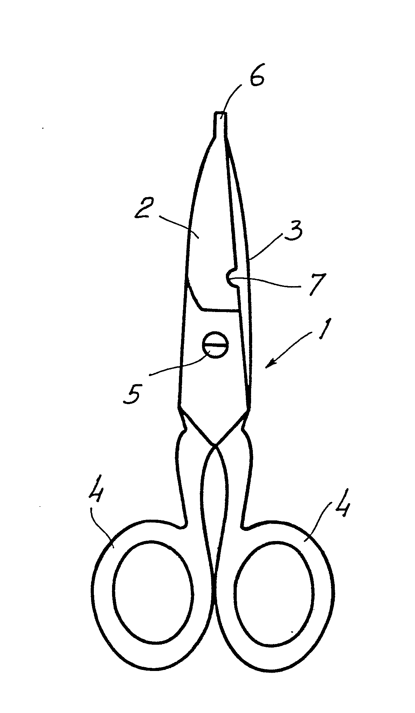

## BRIEF DESCRIPTION OF THE DRAWING

Further characteristics and avantages will become more apparent from the following detailed description of a multiple-use scissors unit, particularly for electricians, being illustrated by way of an indicative but not limitative example in the accompanying drawing the sole figure whereof shows the scissors unit according to the invention.

BAD ORIGINAL

## DESCRIPTION OF THE PREFERRED EMBODIMENT

Referring now to tne number references of tne drawing, the multiple-use scissors unit, particularly for electricians, generally indicated at 1, comprises a first blade 2 and a second blade 3.

Tne blades 2 and 3, as it is conventional, are in cross-wise relationsnip at an intermediate portion thereof, being pivoted tnrougn a tnreaded pin 5 which couples the blades 2 and 3 one to anotner.

At one end thereof the blades 2 and 3 are provided with handle ring members, indicated at 4, which may nave any suitable shapes.

Advantageously, for tne specific use in the electrical field, the handle portions are covered or coated by an electrically insulating plastics material layer effective to provide a good electrical insulation.

Tne main characteristic of the invention is that, at the end of the first blade 2, there is provided a flattened lug 6 of screwdriver end or point shape.

More specifically, the flattened lug 6 is formed on the extension of said blade 2, in such a way as to provide the user with the possibility of

BAD ORIGINAL

gripping the scissors as a conventional screwdriver, by using the flattened lug 6 for screwing on or off.

It is conceptually also possible,if it is desired,to provide,on both blades,two flattened lugs 6,of different size,in order to obtain two screwdrivers of different size,depending on the specific provided use.

It should also be noted that,at an intermediate portion of the blades 2 and 3,opposite seats or housing/recesses are provided,indicated at 7, effective to conventionally act as wire sheath peeling off members.

From the above description it will be self evident the way for using the scissors unit according to the invention.

Actually,the thereinabove illustrated scissors can be used as a conventional scissors pair, for carrying out the cutting operations and the wire sheath peeling off operations.

The difference,with respect to the conventional scissors,is that,at the free end of a blade a screwdriver point is formed,thereby providing the user with the possibility of immediately using an useful tool,such as a screwdriver.

For using the scissors as a screwdriver, they have preferably to be in the closed condition thereof and the user will grip the scissors as it would be gripped the body of a screwdriver the working end whereof is formed by the flattened lug 6.

From the above description it should be noted that the invention fully achieves its objects.

More specifically it is to be pointed out that the multiple-use scissors unit, according to the invention, affords the possibility of having at disposal, immediately, an effectively practical screwdriver which is of great utility for an electrician who has frequently to screw on or off clamp member in order to couple electric wires or cables.

In practicing the invention the used materials, though they are compatible with the intended use, as well as the specific size and shapes, can be any, according to the needs.

BAD ORIGINAL

# C l a i m s

1- A multiple use scissors unit, particularly for electricians, comprising a first and second blades, in cross-wise relationship and pivoted at an intermediate portion thereof, handle ring members being provided at one end of said blades, characterized in that at the free end of at least one said blade a flattened lug is provided in the shape of a screwdriver end or point.

2- A multiple use scissors, particularly for electricians, according to the preceding claim, characterized in that said scissors comprise a pair of lugs, one on each blade, and of different size, effective to provide a screwdriver end pair of different size.

3- A multiple use scissors, particularly for electricians, according to the preceding claims, characterized in tnat said scissors comprise, at an intermediate portion of said blades, a pair of opposite seats or housings effective to act as wire-sneath peeling off members.

4- A multiple use scissors unit, particularly for electricians, according to the preceding claims, and as broadly described and illustrated for the intended objects.

0032484

## DOCUMENTS CONSIDERED TO BE RELEVANT

| Category | Citation of document with indication, where appropriate, of relevant passages | Relevant to claim |
|---|---|---|
| X | US - A - 3 733 627 (EPSTEIN)<br><br>* columns 2 to 5; figures 1 and 5 * | 1,3,4 |
| X | US - A - 1 423 127 (LEVY)<br><br>* pages 1 and 2; figures 1 to 5 * | 1,2,4 |
| | US - A - 2 729 996 (SCHOENWALD)<br><br>* columns 2 and 3; figures 1 to 3 * | 1,3 |
| | US - A - 3 046 820 (PATRICK)<br><br>* column 2; figure 1 * | 3 |

**CLASSIFICATION OF THE APPLICATION (Int. Cl.³)**

B 26 B 13/22
H 02 G   1/12

**TECHNICAL FIELDS SEARCHED (Int. Cl.³)**

B 26 B
H 01 R
H 02 G

**CATEGORY OF CITED DOCUMENTS**

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

The present search report has been drawn up for all claims

| Place of search | Date of completion of the search | Examiner |
|---|---|---|
| The Hague | 8-04-1981 | WOHLRAPP |